# EUROPEAN PATENT SPECIFICATION

(11) **EP 4 281 259 B1**
(45) Date of publication and mention of the grant of the patent: **27.11.2024**
(21) Application number: 21901622.7
(22) Date of filing: 16.12.2021
(51) Int. Cl.: B25J 15/00, B25J 15/10, B25J 15/02, B23P 19/08

(54) **APPARATUS, SYSTEM AND METHOD FOR PROVIDING AN O-RING GRIPPER MODULE**
VORRICHTUNG, SYSTEM UND VERFAHREN ZUR BEREITSTELLUNG EINES O-RING-GREIFERMODULS
APPAREIL, SYSTÈME ET PROCÉDÉ POUR FOURNIR UN MODULE DE PRÉHENSION À JOINT TORIQUE

(43) Date of publication of application: 29.11.2023
(73) Proprietor: Jabil Inc., St. Petersburg, FL 33716 (US)
(72) Inventor: BOSBOOM, Jeroen, St. Petersburg, Florida 33716 (US); NIELSEN, Lucas, St. Petersburg, Florida 33716 (US); NADERI, Babak, St. Petersburg, Florida 33716 (US); MCKENNEY, Michael, St. Petersburg, Florida 33716 (US); PALMER, Ward, St. Petersburg, Florida 33716 (US)
(74) Representative: Gulde & Partner
(86) International application number: PCT/US2021/063702
(87) International publication number: WO 2022/120294

(56) References cited:
- EP-A1- 2 025 479
- WO-A1-2019/192927
- DE-A1- 102004 028 469
- DE-A1- 102017 101 837
- JP-A- H11 347 963
- KR-B1- 100 887 504
- US-A1- 2017 305 017
- US-A1- 2018 339 379
- US-B1- 6 494 516

## Description

### BACKGROUND

### Field of the Disclosure

The present disclosure relates to the transfer and processing of articles, and more particularly to an apparatus, system and method for providing an o-ring gripper module.

### Description of the Background

An o-ring is a loop of elastomer, typically with a round cross-section, that is seated in a groove and compressed during assembly between two or more parts. O-rings are typically used to create a seal at the interface of these two or more parts. This seal between assembled parts may prevent fluids or air from passing through the interface. Thus, without properly installed o-rings, leaks and product failures may occur.

Common problems that occur during o-ring installation may include tears, twisting and turning, and overstretching. O-rings that are small are more prone to tearing and twisting. O-rings that are large do not provide an adequate seal unless very precisely placed. Further, installation of o-rings onto features having threads, tabs, corners or edges resent substantial complexity in the known art, as tearing during such installations is very prevalent.

Each o-ring has a maximum stretch point, based on its composition, diameter, etc. Overstretching causes o-rings to break or tear during assembly or use. Similarly, unevenly stretched o-rings may tear, or may affect a poor seal. Thus, each o-ring should be stretched evenly and only to the extent necessary to achieve a very precise fit upon placement.

Additionally, upon installation, simply rolling an o-ring off of a shaft may lead to spiraling, twisting or turning of the o-ring. Spiraled or twisted o-rings result in leaks and/or damage to the finished assembly. Sliding an o-ring into place, rather than rolling it, helps avoid spiraling and twisting. However, sliding requires more complex installation equipment, as well as the use of significant amounts of expensive lubricant.

The use of robotics is well established as a manufacturing expedient, particularly in applications where human handling is inefficient and/or ineffective-such as during the precise placement of o-rings. Patent document JP11-347963 A discloses an o-ring gripping end effector. Current practice to robotically install o-rings using end effectors suffers from all of the disadvantages referenced above-namely, the tendency to often tear, spiral or twist the o-ring. This is the case because current end effectors do not provide an accounting for the variability in the sizes, shapes and composition of end effectors, and further do not account for variances in pickup or placement locations or location sealing-needs.

Accordingly, there is a need for an improved o-ring gripper.

### SUMMARY

The invention is defined by the appended set of claims. The description that follows is subjected to this limitation. Any disclosure lying outside the scope of said claims is only intended for illustrative as well as comparative purposes.

Certain embodiments are and include an apparatus, system and method for providing an o-ring gripper. The embodiments includes an o-ring gripping end effector, comprising: a housing; a movable stripping bar mechanically associated with the housing; a plurality of modules at least partially within the housing wherein each of the modules comprises: a module head extending at least partially through the movable stripping bar distally from the housing, and comprising at least one retention groove for retaining the o-ring and at least four fingers that each provide a portion of the at least on retention groove and at least two interleaved angular jaws, wherein each of the at least two jaws provides at least two of the at least four fingers, and wherein an increase in angle between the at least two jaws effects an expansion of an area bounded by each of the at least four fingers; wherein the stripping bar is configured to move distally from the housing and thereby strip an ring from the retention groove for placement.

An o-ring gripping end effector may comprise a robot associated with the end effector opposite the housing. The robot may be part of an assembly line and the assembly line may be a consumer products assembly line or an automotive parts assembly line.

Thus, the disclosure provides at least an apparatus, system and method for providing an improved o-ring gripper.

### BRIEF DESCRIPTION OF THE DRAWINGS

The exemplary compositions, systems, and methods shall be described hereinafter with reference to the attached drawings, which are given as non-limiting examples only, in which:
Figure 1 is an illustration of a modular o-ring gripper;
Figure 2 is an illustration of aspects of a modular o-ring gripper;
Figure 3 is an illustration of aspects of a modular o-ring gripper;
Figure 4 is an illustration of aspects of a modular o-ring gripper;
Figure 5 is an illustration of aspects of a modular o-ring gripper;
Figure 6a is an illustration of aspects of a modular o-ring gripper;
Figure 6b is an illustration of aspects of a modular o-ring gripper.
Figure 6c is an illustration of aspects of a modular o-ring gripper; and
Figure 6d is an illustration of aspects of a modular o-ring gripper.

### DETAILED DESCRIPTION

The figures and descriptions provided herein may have been simplified to illustrate aspects that are relevant for a clear understanding of the herein described apparatuses, systems, and methods, while eliminating, for the purpose of clarity, other aspects that may be found in typical similar devices, systems, and methods. Those of ordinary skill may thus recognize that other elements and/or operations may be desirable and/or necessary to implement the devices, systems, and methods described herein. But because such elements and operations are known in the art, and because they do not facilitate a better understanding of the present disclosure, for the sake of brevity a discussion of such elements and operations may not be provided herein. However, the present disclosure is deemed to nevertheless include all such elements, variations, and modifications to the described aspects that would be known to those of ordinary skill in the art, as long as these elements, variations and modifications do not depart from the scope of the appended claims.

Embodiments are provided throughout so that this disclosure is sufficiently thorough and fully conveys the scope of the disclosed embodiments to those who are skilled in the art. Numerous specific details are set forth, such as examples of specific components, devices, and methods, to provide a thorough understanding of embodiments of the present disclosure. Nevertheless, it will be apparent to those skilled in the art that certain specific disclosed details need not be employed, and that embodiments may be embodied in different forms. As such, the disclosed embodiments should not be construed to limit the scope of the disclosure. As referenced above, in some embodiments, well-known processes, well-known device structures, and well-known technologies may not be described in detail.

The terminology used herein is for the purpose of describing particular embodiments only and is not intended to be limiting. For example, as used herein, the singular forms "a", "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The steps, processes, and operations described herein are not to be construed as necessarily requiring their respective performance in the particular order discussed or illustrated, unless specifically identified as a preferred or required order of performance. It is also to be understood that additional or alternative steps may be employed, in place of or in conjunction with the disclosed aspects.

When an element or layer is referred to as being "on", "upon", "connected to" or "coupled to" another element or layer, it may be directly on, upon, connected or coupled to the other element or layer, or intervening elements or layers may be present, unless clearly indicated otherwise. In contrast, when an element or layer is referred to as being "directly on," "directly upon", "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). Further, as used herein the term "and/or" includes any and all combinations of one or more of the associated listed items.

Yet further, although the terms first, second, third, etc. may be used herein to describe various elements, components, regions, layers and/or sections, these elements, components, regions, layers and/or sections should not be limited by these terms. These terms may be only used to distinguish one element, component, region, layer or section from another element, component, region, layer or section. Thus, terms such as "first," "second," and other numerical terms when used herein do not imply a sequence or order unless clearly indicated by the context. Thus, a first element, component, region, layer or section discussed below could be termed a second element, component, region, layer or section without departing from the teachings of the embodiments.

The embodiments provide a modular o-ring gripper system. Each module may pick, stretch and place a single o-ring, and may include a module head that includes multiple jaw-fingers provided by two interleaved angular grippers. To provide optimal finger expansion/retraction, the gripper jaw bases may be positioned between 15 and 30 degrees, such as at 22 degrees, apart at their respective front faces, and may be staggered vertically, such as by 5mm-15mm, such as by 10 mm, to allow for interleaving.

This interleaving may provide, for example, 4 jaw fingers that may spread rectangularly / ovalarly. By way of example, these 4 jaw fingers may spread an oval o-ring into a rectangular contour that ultimately fits over an oval shaped housing.

The design of the jaw fingers, and consequently the angle and interleaving, for each module may be unique to each desired contour of a picked and placed o-ring. For example, the desired stretched position of the o-ring at full open may be assessed, and then the jaws, and consequently the jaw fingers, may be configured around each other to achieve this stretch of the o-ring.

The modules can be arranged in clusters of similar or dissimilar types, depending on the application. For example, four, six or eight modules may be arranged in a row on a particular end effector that carries the modules.

Each module head, and correspondingly its gripper fingers, present a common "groove" that retains the o-ring without slipping until a stripping bar of the module housing comes down to strip and place the o-ring. That is, in order to strip the o-rings off of the fingers, the stripping plate of the stripping bar is brought down over the module head, and correspondingly the fingers, to force all o-rings off of their respective jaw fingers once that module head is in position for proper dispensing.

One advantage of the embodiments is the ability to place multiple o-rings at a time, even if they are of different sizes, with a very compact end effector. Thereby, the embodiments save on the cost of extra production work stations, decrease assembly-line length by allowing for the placement of all payload at once, and are translatable across many configurations of parallel pallet tooling.

The embodiments allow for dispensing of both commonly shaped and sized o-rings, as well as of small and/or irregularly shaped o-rings. By way of example, the disclosed translation allows uniquely for o-ring stripping even if the target part has flanges or tabs to hook onto the o-ring.

O-rings are typically elastic bands, such as being formed of rubber or polyurethane, which are placed in a variety of manufacturing applications. Dispensing may occur onto metallic or plastic components, by way of example, such as on a high speed conveyor pallet. In the embodiments, these o-rings may be placed in multiples, such as four, six, or eight at a time, by way of non-limiting example.

The embodiments may be employed on any production line that inserts o-rings and/or o-ring seals. Products created on such production lines include consumer products, automotive parts such as fuel injectors, and the like. In addition to o-rings, any other complaint/elastic parts can be handled using the disclosed embodiments.

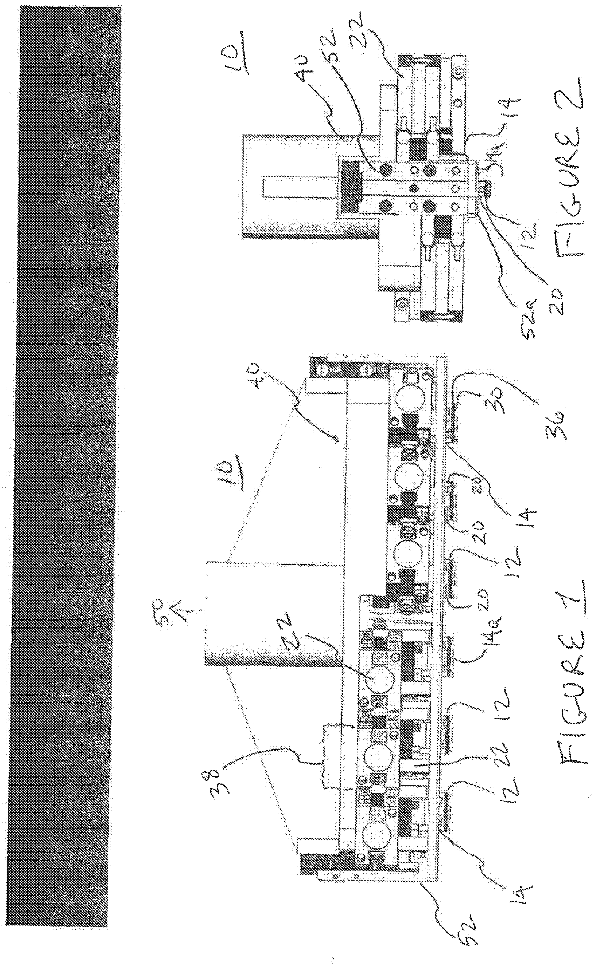

Figures 1 and 2 illustrate a multi-position modular end effector for o-ring placement 10. The illustrations show a 6-position modular construction, although it will be appreciated that other multiples of modules may be included. Moreover, although the o-rings 12 shown are of the same type and size in association with each module, it will be understood that ones of the modules 14 may be dedicated to an o-ring 12 of a different size or type.

As illustrated, each module 14 may comprise a "head" 14a onto which the o-ring 12 is placed for dispensing. The head 14a may preferably be formed of multiple "fingers" 20 extending outwardly from each module 14, and more particularly from a jaw base 22 or jaw bases of each module 14, into each o-ring 12.

Each module head 14a may have, at the portion extended through the o-ring 12 to grasp it, a "mushroom cap" 30 feature. This mushroom cap 30 feature may be formed of the distal-most aspects (from the end effector main housing) of respective ones of the jaw fingers 20, in conjunction.

Thereby, each module head 14a may comprise one or more "grooves" 36 into which each o-ring 12 is seated when picked, and from which each o-ring 12 is removed when dispensed. That is, the jaw fingers 20 may form a "groove" 36 just below the mushroom cap 30.

As such, each module 14 may have the actuating power and electrical, mechanical and electromechanical (collectively, "electromechanical") aspects 38 thereof at least partially resident within the end effector housing 40. These electromechanical aspects 38 may include actuation aspects for actuating each module 14, such as actuating the interleaved jaws 22 from which the fingers 20 extend, as discussed further herein below. The end effector housing 40 may additionally include features for mechanical association with production line robotics 50 that may move and/or power the end effector.

Also associated with the end effector housing 40 may be a stripping bar 52. In embodiments, each module head 14 may preferably at least partially extend through a respectively dedicated opening in a stripping plate 52a of this stripping bar 52, such that a downward movement of the snugly-fit opening about that module 14 on the stripping plate 52a effects a slide of a retained o-ring 12 over the mushroom cap 30 and onto the placement location. The opening in the stripping plate 52a can also be a window. The stripping plate 52a may comprise a plurality of windows therein.

More specifically, after picking of an o-ring 12 and upon positioning of the o-ring 12 upon the module head 14a for proper dispensing, the end effector housing 40 may have features for executing a downward movement of the stripping bar 52 over the extended portion of the module head 14a, i.e., the mushroom cap 30 of the module head 14a. Upon this downward movement, each o-ring 12 is stripped from its groove(s) 36 for dispensing. This stripping may further include, for example, a contraction of the jaw fingers 20 grasping the o-ring 12, thereby decreasing the circumference of the mushroom cap 30 and consequently more efficiently dispensing the o-ring 12, or an expansion of the jaw fingers 20, such as to further but briefly stretch an o-ring 12 into a proper shape or circumference for dispensing.

In particular, Figure 2 illustrates a side-view of the end effector housing 40, the stripping bar 52, the extended module head 14a, and interleaved jaws 22 that may present the jaw fingers 20 for each module head 14a. As is evident from the embodiment from Figure 2, the stripping bar 52 may be actuated downward over each module head 14a by any of a variety of methodologies, such as a mechanical cam, an interleaved slide, pneumatics, or the like, by way of non-limiting example.

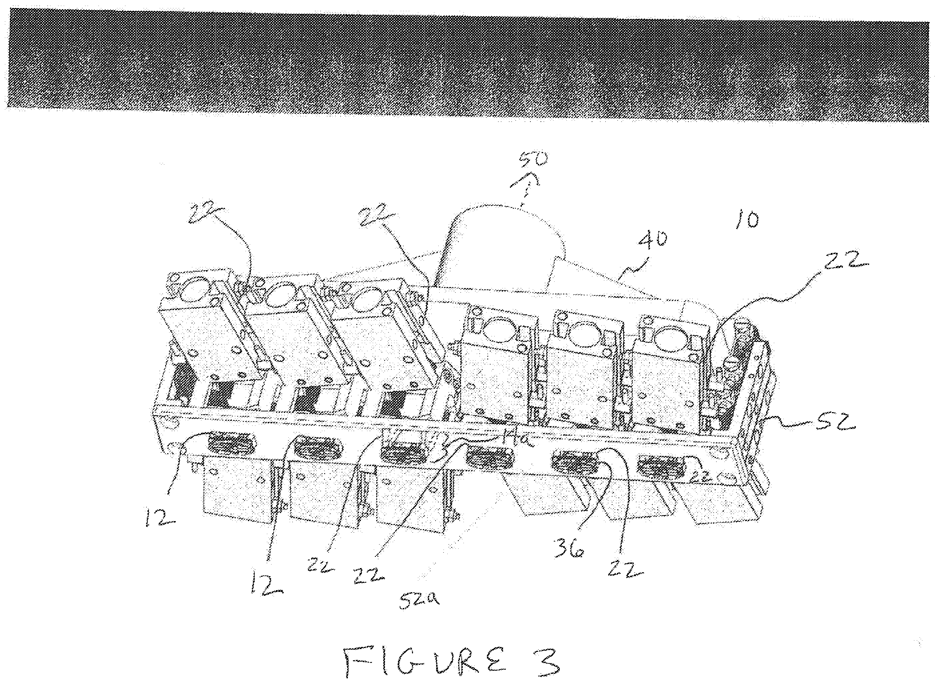

Figure 3 shows a bottom view of the disclosed modular o-ring gripping module 10. In this illustration, the stripping bar 52 is extended downward to reach, and subsequently pass over, the retaining groove(s) 36 for each o-ring 12. This extension of the stripping bar 52 effectuates a shedding of the o-rings 12 for dispensing.

Also included in the embodiment of Figure 3 are two interleaved jaws 22, each having 2 jaw fingers 20, wherein each jaw-base 22 for each module extends outwardly substantially axially perpendicular to the longitudinal axis of the stripping bar 52. Although the jaws 22 of each module 14 are shown as fixed within the end effector housing 40 in Figure 3, it will be understood that the module 14 and/or its respective jaws 22 may be movable and/or float within the end effector housing 40.

More specifically, additional functionality may be added by mounting each module to a floating air bearing to allow it to "float" in the x-y-z axes and/or in theta. This float may be monitored by cameras, such as to provide vision/machine vision, both for acquiring o-rings (or like-parts) and for placing o-rings. This camera may be associated with the end effector housing in order to adjust each module head for optimal picking and placement. Thereby, variances in product upon pick and place can be mitigated by compensating the module position.

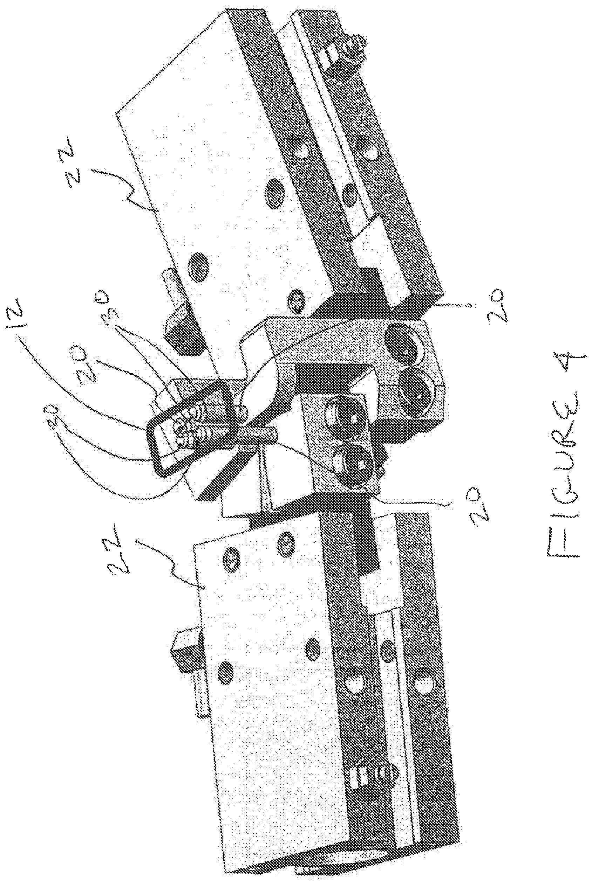

Figure 4 illustrates two interleaved jaws 22, each providing two jaw fingers 20. These interleaved jaws 22 are angled in the illustration. The angular jaws 22 may be then overlapped as shown such that, upon rotation of either or both of the angled jaw bases 22, the fingers 20 of both jaws 22 cause an expansion or retraction of the module head/mushroom cap 30 (dependent upon the angle of rotation of the jaw bases with respect to one another).

More particularly, angled gripper jaws may provide: a long stroke across the 4 total jaw fingers, thereby enabling substantial stretching and/or shaping of a retained o-ring; as well as providing a very tight jaw finger closed position. As will be appreciated by the skilled artisan, this 4 finger configuration thus allows for translation of the o-ring in both the x and y axis, rather than the simple single-axis translation provided by the known art.

The enhanced retraction/expansion of the module head provided by the embodiments causes a correlated retraction/expansion of the o-ring retained in the groove(s) of that module head. In the example of Figure 4, the o-ring 12 is shown at its full expanded shape and circumference available from the illustrated jaw finger configuration, while the jaw fingers 20 are shown as retracted.

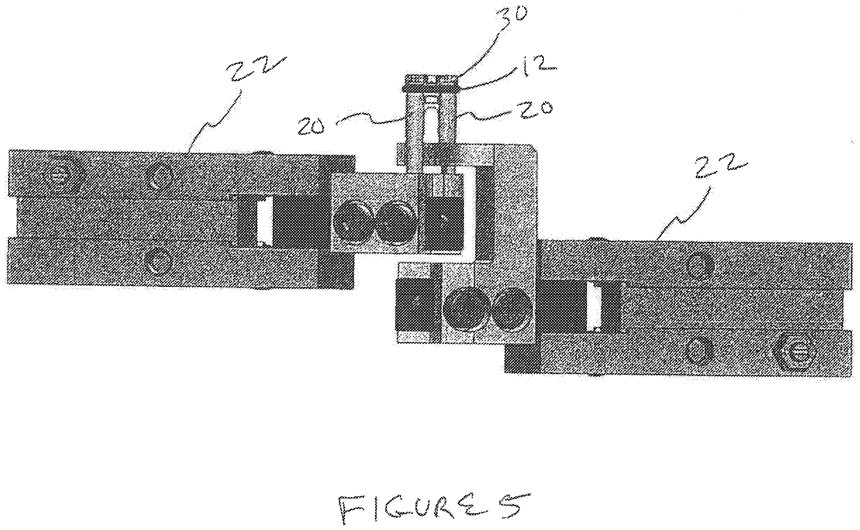

Figure 5 is a side-view illustration of the embodiment of Figure 4. As is evident, the offsetting of the angular jaw heads 22 provides an interleaving of the jaw fingers 20 as referenced above, thereby enabling the contraction/expansion of the mushroom cap 30 presented by the fingers 20 upon a rotation of either or both of the jaw heads 22.

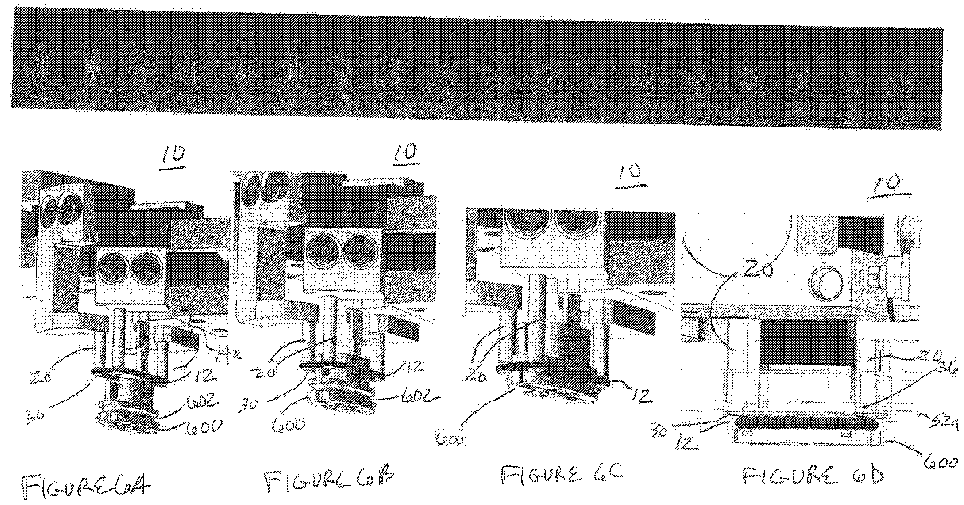

Figures 6A-6D illustrate a picking and placement sequence for the disclosed modular o-ring gripper system 10. In short, the o-ring 12 is presented, picked by the module head 14a, stretched as needed for placement by the angular jaws' fingers 20, positioned for placement, and placed by extension of the stripping bar 52. After these steps, the modular gripper 10 may depart and return to the picking location to pick o-rings 12 anew.

More particularly, and as illustrated in Figure 6A, the o-ring 12 is picked, typically via an expansion of the fingers 20 upon insertion of the previously-contracted module head 14a through the o-ring 12. That is, typically, the contracted jaw fingers 20 are inserted through the o-ring 12 for grasping of the o-ring 12.

Figure 6B illustrates the positioning of the jaw fingers 20 over a grooved product seat 600 for the o-ring 12. Figure 6C illustrates the setting of the o-ring 12 on the module head groove 36 upon the groove 602 of the grooved product seat 600, i.e., the positioning of the module head 14a and the o-ring 12 for eventual placement of the o-ring 12.

As shown in Figure 6D, the stripping bar 52 then comes down to depart that o-ring 12 from the jaw fingers 20 onto the grooved product seat 600. The stripping bar 52 may then retract, and the end effector 10 may depart the seating location.

The foregoing apparatuses, systems and methods may also include the control of the various robotic and gripping functionality referenced throughout. Such control may include, by way of non-limiting example, manual control using one or more user interfaces, such as a controller, a keyboard, a mouse, a touch screen, or the like, to allow a user to input instructions for execution by software code associated with the robotics and with the systems discussed herein. Additionally, and as is well known to those skilled in the art, system control may also be fully automated, such as wherein manual user interaction only occurs to "set up" and program the referenced functionality, i.e., a user may only initially program or upload computing code to carry out the predetermined movements and operational sequences discussed throughout. In either a manual or automated embodiment, or in any combination thereof, the control may be programmed, for example, to relate the known positions of substrates, the robotics, the stationary point, and the relative positions there between, for example.

It will be appreciated that the herein described systems and methods may operate pursuant to and/or be controlled by any computing environment, and thus the computing environment employed not limit the implementation of the herein described systems and methods to computing environments having differing components and configurations. That is, the concepts described herein may be implemented in any of various computing environments using any of various components and configurations.

Further, the descriptions of the disclosure are provided to enable any person skilled in the art to make or use the disclosed embodiments. Various modifications to the disclosure will be readily apparent to those skilled in the art, and the generic principles defined herein may be applied to other variations without departing from the scope of the appended claims.

Thus, the disclosure is not intended to be limited to the examples and designs described herein, but rather is to be accorded the widest scope consistent with the principles and novel features disclosed herein.

## Claims

1. An o-ring gripping end effector (10), comprising:
a housing (40);
a movable stripping bar (52) mechanically associated with the housing (40);
a plurality of modules (14) at least partially within the housing (40), each of the modules (14) comprising:
a module head (14a) extending at least partially through the movable stripping bar (52) distally from the housing (40), and comprising at least one retention groove (36) configured to retain an o-ring (12) and at least four jaw fingers (20) that each provide a portion of the at least on retention groove (36);
at least two interleaved angular jaws (22), wherein each of the at least two jaws (22) provides at least two of the at least four jaw fingers (20), and wherein an increase in angle between the at least two jaws (22) effects an expansion of an area bounded by each of the at least four jaw fingers (20);
wherein the stripping bar (52) is configured to move distally from the housing (40), and thereby strip an o-ring (12) from the retention groove (36) for placement.

2. The o-ring gripping end effector (10) of claim 1, wherein the stripping bar (52) comprises a stripping plate (52a) having a plurality of windows therein, and wherein each of the windows is sized and shaped correspondently to the module head (14a) extending therethrough.

3. The o-ring gripping end effector (10) of claim 1, wherein a face of each of the at least two interleaved angular jaws (22) is at an angle of between 15 and 30 degrees offset from a face of the other of the at least two interleaved jaws (22).

4. The o-ring gripping end effector (10) of claim 3, wherein the angle is corresponded to a needed expansion corresponded to a particular one of an o-ring (12).

5. The o-ring gripping end effector (10) of claim 1, wherein each of the at least two interleaved angular jaws (22) is offset vertically from the other by a range of 5mm to 15mm

6. The o-ring gripping end effector (10) of claim 5, wherein the vertical offset is corresponded to a needed expansion of a particular one of an o-ring.

7. The o-ring gripping end effector (10) of claim 1, wherein the expanding bounded area is rectangular.

8. The o-ring gripping end effector (10) of claim 1, wherein the expanding bounded area is hexagonal.

9. The o-ring gripping end effector (10) of claim 1, wherein ones of the plurality of modules (14) correspond to different types of o-rings (12).

10. The o-ring gripping end effector (10) of claim 1, wherein tips of the jaw fingers (20) distal from the housing (40) form a mushroom cap (30) adjacent the at least one retention groove (36).

11. The o-ring gripping end effector (10) of claim 1, wherein o-ring gripping end effector (10) is configured to work with irregularly shaped o-rings (12).

12. The o-ring gripping end effector (10) of claim 1, wherein o-ring gripping end effector (10) is configured to work with o-rings composed of one of rubber or polyurethane.

13. The o-ring gripping end effector (10) of claim 1, further comprising a robot (50) associated with the o-ring gripping end effector (10) opposite the housing (40).

14. The o-ring gripping end effector (10) of claim 1, wherein the plurality of modules (14) comprises six modules (14).

15. The o-ring gripping end effector (10) of claim 1, wherein the housing (40) comprises electromechanical actuation for the at least two interleaved angular jaws (22) and the movable stripping bar (52).

## Patentansprüche

1. O-Ringgreif-Endeffektor (10), umfassend:
ein Gehäuse (40);
eine bewegliche Abstreifleiste (52), die mechanisch mit dem Gehäuse (40) verbunden ist;
eine Vielzahl von Modulen (14) zumindest teilweise innerhalb des Gehäuses (40), wobei jedes der Module (14) Folgendes umfasst:
einen Modulkopf (14a), der sich zumindest teilweise durch die bewegliche Abstreifleiste (52) distal vom Gehäuse (40) erstreckt und mindestens eine Haltenut (36), die zum Halten eines O-Rings (12) konfiguriert ist, und mindestens vier Backenfinger (20) umfasst, die jeweils einen Abschnitt der mindestens einen Haltenut (36) ausbilden;
mindestens zwei ineinander greifende winklige Backen (22), wobei jede der mindestens zwei Backen (22) mindestens zwei der mindestens vier Backenfinger (20) bereitstellt, und wobei eine Vergrößerung des Winkels zwischen den mindestens zwei Backen (22) eine Ausdehnung eines Bereichs bewirkt, der durch jeden der mindestens vier Backenfinger (20) begrenzt wird;
wobei die Abstreifleiste (52) so konfiguriert ist, dass sie sich distal vom Gehäuse (40) bewegt und dadurch einen O-Ring (12) zur Platzierung aus der Haltenut (36) abstreift.

2. O-Ringgreif-Endeffektor (10) nach Anspruch 1, wobei die Abstreifleiste (52) eine Abstreifplatte (52a) mit einer Vielzahl von Fenstern darin umfasst, und wobei jedes der Fenster entsprechend dem sich durch sie hindurch erstreckenden Modulkopf (14a) bemessen und geformt ist.

3. O-Ringgreif-Endeffektor (10) nach Anspruch 1, wobei eine Fläche jeder der mindestens zwei ineinander greifende Winkelbacken (22) in einem Winkel zwischen 15 und 30 Grad versetzt zu einer Fläche der anderen der mindestens zwei ineinander greifende Backen (22) ist.

4. O-Ringgreif-Endeffektor (10) nach Anspruch 3, wobei der Winkel einer erforderlichen Ausdehnung entspricht, die einem bestimmten eines O-Rings (12) entspricht.

5. O-Ringgreif-Endeffektor (10) nach Anspruch 1, wobei jede der mindestens zwei ineinander greifenden Winkelbacken (22) vertikal um einen Bereich von 5 mm bis 15 mm gegen die andere versetzt ist.

6. O-Ringgreif-Endeffektor (10) nach Anspruch 5, wobei der vertikale Versatz einer erforderlichen Ausdehnung eines bestimmten eines O-Rings entspricht.

7. O-Ringgreif-Endeffektor (10) nach Anspruch 1, wobei der sich ausdehnende begrenzte Bereich rechteckig ist.

8. O-Ringgreif-Endeffektor (10) nach Anspruch 1, wobei der sich ausdehnende begrenzte Bereich sechseckig ist.

9. O-Ringgreif-Endeffektor (10) nach Anspruch 1, wobei einzelne der Vielzahl von Modulen (14) verschiedenen Arten von O-Ringen (12) entsprechen.

10. O-Ringgreif-Endeffektor (10) nach Anspruch 1, wobei die vom Gehäuse (40) distalen Spitzen der Backenfinger (20) eine Pilzkappe (30) benachbart zu der mindestens einen Haltenut (36) bilden.

11. O-Ringgreif-Endeffektor (10) nach Anspruch 1, wobei der O-Ringgreif-Endeffektor (10) konfiguriert ist, um mit unregelmäßig geformten O-Ringen (12) zu arbeiten.

12. O-Ringgreif-Endeffektor (10) nach Anspruch 1, wobei der O-Ringgreif-Endeffektor (10) konfiguriert ist, um mit O-Ringen zu arbeiten, die aus einem von Gummi oder Polyurethan bestehen.

13. O-Ringgreif-Endeffektor (10) nach Anspruch 1, der ferner einen Roboter (50) umfasst, der mit dem O-Ringgreif-Endeffektor (10) gegenüber dem Gehäuse (40) verbunden ist.

14. O-Ringgreif-Endeffektor (10) nach Anspruch 1, wobei die Vielzahl von Modulen (14) sechs Module (14) umfasst.

15. O-Ringgreif-Endeffektor (10) nach Anspruch 1, wobei das Gehäuse (40) eine elektromechanische Betätigung für die mindestens zwei ineinander greifenden Winkelbacken (22) und die bewegliche Abstreifleiste (52) umfasst.

## Revendications

1. Effecteur terminal de préhension de joint torique (10), comprenant :
un boîtier (40) ;
une barre de dénudage (52) mobile associée mécaniquement au boîtier (40) ;
une pluralité de modules (14) au moins partiellement à l'intérieur du boîtier (40), chacun des modules (14) comprenant :
une tête de module (14a) s'étendant au moins partiellement à travers la barre de dénudage (52) mobile distalement par rapport au boîtier (40), et comprenant au moins une rainure de rétention (36) configurée pour retenir un joint torique (12) et au moins quatre doigts de mâchoire (20) qui fournissent chacun une partie de l'au moins une rainure de rétention (36) ;
au moins deux mâchoires angulaires imbriquées (22), chacune des au moins deux mâchoires (22) fournissant au moins deux des au moins quatre doigts de mâchoire (20), et une augmentation de l'angle entre les au moins deux mâchoires (22) entraînant une expansion d'une zone délimitée par chacun des au moins quatre doigts de mâchoire (20) ;
dans lequel la barre de dénudage (52) est configurée pour se déplacer de manière distale par rapport au boîtier (40), et ainsi dénuder un joint torique (12) de la rainure de rétention (36) en vue de sa mise en place.

2. Effecteur terminal de préhension de joint torique (10) de la revendication 1, dans lequel la barre de dénudage (52) comprend une plaque de dénudage (52a) comportant une pluralité de fenêtres, et dans lequel chacune des fenêtres est dimensionnée et formée de manière à correspondre à la tête de module (14a) qui s'étend à travers elle.

3. Effecteur terminal de préhension de joint torique (10) de la revendication 1, dans lequel une face de chacune des au moins deux mâchoires angulaires imbriquées (22) est à un angle compris entre 15 et 30 degrés décalé par rapport à une face de l'autre des au moins deux mâchoires angulaires imbriquées (22).

4. Effecteur terminal de préhension de joint torique (10) de la revendication 3, dans lequel l'angle correspond à une expansion nécessaire correspondant à un joint particulier d'un joint torique (12).

5. Effecteur terminal de préhension de joint torique (10) de la revendication 1, dans lequel chacune des au moins deux mâchoires angulaires imbriquées (22) est décalée verticalement par rapport à l'autre d'une distance comprise entre 5 mm et 15 mm.

6. Effecteur terminal de préhension de joint torique (10) de la revendication 5, dans lequel le décalage vertical correspond à une expansion nécessaire d'un joint particulier d'un joint torique .

7. Effecteur terminal de préhension de joint torique (10) de la revendication 1, dans lequel la zone délimitée en expansion est rectangulaire.

8. Effecteur terminal de préhension de joint torique (10) de la revendication 1, dans lequel la zone délimitée en expansion est hexagonale.

9. Effecteur terminal de préhension de joint torique (10) de la revendication 1, dans lequel des modules de la pluralité de modules (14) correspondent à différents types de joints toriques (12).

10. Effecteur terminal de préhension de joint torique (10) de la revendication 1, dans lequel les extrémités des doigts de mâchoire (20) distales du boîtier (40) forment un chapeau de champignon (30) adjacent à l'au moins une rainure de rétention (36).

11. Effecteur terminal de préhension de joint torique (10) de la revendication 1, dans lequel l'effecteur terminal de préhension de joint torique (10) est configuré pour travailler avec des joints toriques (12) de forme irrégulière.

12. Effecteur terminal de préhension de joint torique (10) de la revendication 1, dans lequel l'effecteur terminal de préhension de joint torique (10) est configuré pour travailler avec des joints toriques composés d'un de caoutchouc ou de polyuréthane.

13. Effecteur terminal de préhension de joint torique (10) de la revendication 1, comprenant en outre un robot (50) associé à l'effecteur terminal de préhension de joint torique (10) à l'opposé du boîtier (40).

14. Effecteur terminal de préhension de joint torique (10) de la revendication 1, dans lequel la pluralité de modules (14) comprend six modules (14).

15. Effecteur terminal de préhension de joint torique (10) de la revendication 1, dans lequel le boîtier (40) comprend une commande électromécanique pour les au moins deux mâchoires angulaires (22) imbriquées et la barre de dénudage (52) mobile.
